# EUROPÄISCHE PATENTSCHRIFT

(11) **EP 0 796 358 B1**
(45) Veröffentlichungstag und Bekanntmachung des Hinweises auf die Patenterteilung: **10.06.1998**
(21) Anmeldenummer: 96932368.2
(22) Anmeldetag: 03.10.1996
(51) Int. Cl.: D01F 2/00, C08J 5/18, C08L 1/02

(54) **CELLULOSEFASER**
CELLULOSE FIBRES
FIBRE DE CELLULOSE

(30) Priorität: 06.10.1995 AT 1663/95
(43) Veröffentlichungstag der Anmeldung: 24.09.1997
(73) Patentinhaber: LENZING AKTIENGESELLSCHAFT, 4860 Lenzing (AT)
(72) Erfinder: FIRGO, Heinrich, A-4840 Vöcklabruck (AT); MÜLLEDER, Eduard, A-4030 Linz (AT); SEIDL, Sigrid, A-4863 Seewalchen (AT)
(74) Vertreter: Schwarz, Albin, Dr. Kopecky & Schwarz Patentanwälte
(86) Internationale Anmeldenummer: AT9600180
(87) Internationale Veröffentlichungsnummer: WO9713893

(56) Entgegenhaltungen:
- EP-A- 0 665 311
- WO-A-94/20656
- WO-A-95/00697
- WO-A-95/30043
- DE-A- 4 312 219
- DE-A-19 520 804
- TEXTILE RESEARCH JOURNAL, Februar 1969, Seiten 173-180, XP002025205 STANLEY P ROWLAND ET AL: "A Delayed-Curing Cotton Fabric Based on an Internally Catalyzed Cotton Cellulose and Divinyl Sulfone " in der Anmeldung erwähnt
- MELLIAND TEXTILBERICHTE, Nr. 6, Juni 1964, HEIDELBERG, BRD, Seiten 641-647, XP002025206 DR. U. EINSELE: "Über die Aminierung von Cellulosefasern bei der Textilveredlung und deren physikalisches und chemisches Verhalten bei der Textilveredlung"

## Beschreibung

Die vorliegende Erfindung betrifft einen neuen Celluloseformkörper und ein Verfahren zur Herstellung dieses Celluloseformkörpers. Die vorliegende Erfindung betrifft insbesondere eine neue Cellulosefaser und eine neue Cellulosefolie, die eine vorbestimmte Fibrillierungsneigung aufweisen.

Der Begriff "Formkörper" soll für die Zwecke der vorliegenden Beschreibung und Patentansprüche insbesondere Fasern und Folien bedeuten. Wenn im folgenden "Fasern" genannt werden, so sind damit Fasern, Folien und auch andere Formkörper gemeint.

Als Alternative zum Viskoseverfahren wurden in den letzten Jahren eine Reihe von Verfahren beschrieben, bei denen Cellulose ohne Bildung eines Derivats in einem organischen Lösungsmittel, einer Kombination eines organischen Lösungsmittels mit einem anorganischen Salz oder in wässerigen Salzlösungen gelöst wird. Cellulosefasern, die aus solchen Lösungen hergestellt werden, erhielten von der BISFA (The International Bureau for the Standardisation of man made Fibres) den Gattungsnamen Lyocell. Als Lyocell wird von der BISFA eine Cellulosefaser definiert, die durch ein Spinnverfahren aus einem organischen Lösungsmittel erhalten wird. Unter "organisches Lösungsmittel" wird von der BISFA ein Gemisch aus einer organischen Chemikalie und Wasser verstanden.

Die vorliegende Erfindung bezieht sich auf ein ganz bestimmtes Verfahren zur Herstellung einer Cellulosefaser der Gattung Lyocell, bei welchem eine Celluloselösung durch einen Luftspalt in ein wäßriges Fällbad extrudiert wird. Dieses Verfahren wird im folgenden als Aminoxidverfahren bezeichnet und wendet als Lösungsmittel ein tertiäres Aminoxid, insbesondere N-Methylmorpholin-N-oxid (NMMO), an. Ein solches Verfahren ist z.B. in der US-A - 4,246,221 beschrieben und liefert Fasern, die sich durch eine hohe Festigkeit, einen hohen Naßmodul und durch eine hohe Schlingenfestigkeit auszeichnen.

Eine charakteristische Eigenschaft der Lyocell-Fasern ist ihre ausgeprägte Neigung, im nassen Zustand zu fibrillieren. Unter Fibrillierung wird das Aufbrechen der nassen Faser in Längsrichtung bei mechanischer Beanspruchung im nassen Zustand verstanden, wodurch die Faser ein haariges, pelziges Aussehen erhält. Als Ursache für die Fibrillierung wird angenommen, daß die Faser aus in Faserrichtung angeordneten Fibrillen besteht, zwischen denen nur in geringem Ausmaß eine Quervernetzung vorhanden ist.

Die WO 92/14871 beschreibt ein Verfahren zur Herstellung einer Faser mit verringerter Fibrillierneigung. Diese wird erzielt, indem alle Bäder, mit denen die frisch gesponnene Faser vor der ersten Trocknung in Berührung kommt, einen pH-Wert von maximal 8,5 aufweisen.

Die WO 92/07124 beschreibt ebenfalls ein Verfahren zur Herstellung einer Faser mit verringerter Fibrillierneigung, gemäß dem die frisch gesponnene, also noch nicht getrocknete Faser mit einem kationisierbaren Polymer behandelt wird. Als derartiges Polymer wird ein Polymer mit Imidazol- und Azetidin-Gruppen genannt. Zusätzlich kann noch eine Behandlung mit einem emulgierbaren Polymer, wie z.B. Polyethylen oder Polyvinylacetat, oder auch eine Vernetzung mit Glyoxal erfolgen.

In einem bei der CELLUCON-Konferenz 1993 in Lund, Schweden, von S. Mortimer gehaltenen Vortrag wurde erwähnt, daß die Fibrillierneigung mit zunehmender Verstreckung ansteigt.

Zur Verringerung der Fibrillierungsneigung von Lyocell-Fasern sind schon einige Methoden publiziert worden:
So ist z.B. aus der WO 95/02082 der Anmelderin bekannt, daß die Fibrillierung durch bestimmte Kombinationen von Spinnparametern verringert werden kann.

Weiters ist bekannt, daß die Fibrillierungseigenschaften von Lyocell-Fasern durch chemische Vernetzung verbessert werden können. So beschreibt z.B. die EP-A - 0 538 977 die Vernetzung von Lyocell-Fasern mit chemischen Reagentien, die mit Cellulose reagieren können, und zwar sowohl im niemals getrockneten Zustand, also bei der Faserherstellung, als auch im getrockneten Zustand, also im wesentlichen während der textilen Veredelung der textilen Flächengebilde.

Bekannt ist ferner, daß die Fibrillierungsneigung von Lyocell-Fasern verringert werden kann, indem sie mit Glyoxal vernetzt werden (M.Dubé und R.H.Blackwell, TAPPI Proceedings; International Dissolving and Specialty Pulps, Seiten 111-119; 1983).

Die Vernetzung von Lyocell-Fasern während der textilen Veredelung hat den prinzipiellen Nachteil, daß für den Ausrüster zusätzliche Schritte entstehen, die zu zusätzlichen Kosten führen, und daß die Anwendung solcher zusätzlicher Schritte auch einschränkend auf die Vielzahl der herstellbaren textilen Flächengebilde wirkt, was wiederum zu einer Beeinträchtigung der Vermarktungsfähigkeit der Lyocell-Fasern führt. Ein weiterer prinzipieller Nachteil der Behandlung von Lyocell-Fasern in bereits einmal getrocknetem Zustand besteht darin, daß die Zugänglichkeit der Fasern für Vernetzungschemikalien besonders nach dem ersten Trocknungsschritt gegenüber dem Zustand, den sie frisch gesponnen aufweisen, wesentlich reduziert ist, was dazu führt, daß größere Mengen an Chemikalien eingesetzt werden müssen.

Die in der oben genannten Patentanmeldung als Beispiel angeführten Vernetzungsreagentien besitzen als vernetzungsfähige Gruppen mit Halogen substituierte, stickstoffhaltige Ringstrukturen, die befähigt sind, bei alkalischen Bedingungen mit den Hydroxylgruppen der Cellulose zu reagieren. Weiters sind Verbindungen mit Vinylsulfongruppen oder deren Vorläufern beschrieben. Auch diese Verbindungen reagieren im wesentlichen nur bei Zugabe von Alkali oder benötigen Alkali als Neutralisationsreagens für abgespaltene Säuren. Die in dieser Patentanmeldung vorgeschlagenen Verfahrensweisen zur Vernetzung von niemals getrockneten Lyocell-Fasern haben insofern gravierende Nachteile, als sie in einem kontinuierlichen Faser-Nachbehandlungsprozeß nur sehr schwer und mit hohem Aufwand durchzuführen sind. Bei Verwendung sehr reaktionsfähiger Verbindungen der angeführten Verbindungsklassen ist eine getrennte Aufbringung der Vernetzersubstanzen von den basischen Verbindungen erforderlich, die zur Auslösung der Reaktion mit der Cellulose notwendig sind. Werden weniger reaktive Verbindungen verwendet, ist zwar häufig eine gleichzeitige Aufbringung der Vernetzungsreagentien und des Alkali möglich, in diesem Fall muß jedoch ein Temperaturschritt durchgeführt werden, was in der zitierten Patentanmeldung durch "Dämpfen" erreicht wird. Damit ist ein gravierender Nachteil des angeführten Patentes eine Erhöhung der Anzahl der Nachbehandlungsschritte, was mit wesentlichen Mehrkosten vor allem bei der Errichtung einer solchen Faserproduktionsanalage verbunden ist.

Mit dieser Verfahrensweise ist aber ein weiterer Nachteil verbunden. Bei der Reaktion der halogenierten, stickstoffhaltigen Ringe bzw. der Vinylsulfone oder deren Vorläufersubstanzen entstehen bei der Vernetzungsreaktion Salze, die anschließend aus der Faser ausgewaschen werden müssen, außerdem müssen auch überschüssige und nicht mit der Cellulosefaser abreagierte Restchemikalien ausgewaschen werden. Dies bedeutet, daß in einem kontinuierlichen Faser-Herstellungsprozeß noch ein weiterer Nachbehandlungschritt notwendig ist, der weitere Investitionskosten und Betriebskosten verursacht und zusätzlich noch Probleme mit belastetem Abwasser mit sich bringt.

In der WO 94/24343 der Anmelderin werden ähnliche Vorgangsweisen zur Vernetzung der Lyocell-Faser gegen die Fibrillierung vorgeschlagen, wobei dort die Verwendung von alkalischen Puffern und eine Bestrahlung mit elektromagnetischen Wellen als besonders vorteilhaft beschrieben wird.

In der WO 94/20656 wird beschrieben, daß die Fibrillierung von Lyocell-Fasern durch Vernetzung mit konventionellen Vernetzungschemikalien, die üblicherweise zur Verbesserung der Knitterwinkel von Cellulosetextilien verwendet werden, verringert wird, ohne daß gleichzeitig die Anfärbbarkeit der Fasern zurückgeht, wenn man die Vernetzung bei gleichzeitiger Anwesenheit von flexiblen, linearen Polymeren durchführt. Im wesentlichen werden konventionelle N-Methylolharze (Formaldehyd-arm) und die üblichen sauren Katalysatoren verwendet. Die Methode wird sowohl zur Anwendung an der getrockneten als auch an der niemals getrockneten Faser als zum Erfolg führend beschrieben.

Auch diese Verfahrensweise hat Nachteile, die einen anderen Vernetzungsweg wünschenswert erscheinen lassen. Die üblicherweise für die Verbesserung der Naßknitterwinkel angewendeten Methylolharze brauchen nämlich zur Reaktion mit den OH-Gruppen der Cellulose ziemlich hohe Reaktionstemperaturen, und zwar in der Regel 120°C bis 160°C, wenn die Reaktion mit ausreichender Geschwindigkeit ablaufen soll. Auch in der zitierten internationalen Patentanmeldung werden sehr hohe Temperaturen zur Fixierung der Vernetzungsmittel angewendet. Dies führt immer zu einem mehr oder weniger großen Verlust an Faserfestigkeit, aber vor allem zu einem Verlust an Faserdehnung und Schlingenfestigkeit, und die Faser wird spröde. Außerdem sind in der genannten Patentanmeldung keine Vergleichenden physikalischen Faserdaten vor und nach der Vernetzungsreaktion angeführt. Reaktionen mit den zitierten N-Methylolverbindungen bei niedriger Temperatur und damit höherer Faserfeuchtigkeit, die keine so gravierenden Festigkeits- und Dehnungsverluste bewirken, brauchen üblicherweise sehr lange Reaktionszeiten und sind damit für kontinuierliche Faserproduktionsprozesse kaum geeignet.

Von S.P. Rowland und M.A.F. Brannan wird im "Textile Research Journal, Februar 1969, Seiten 173-180 beschrieben, daß quaternisierte 2-(Diethylamino)ethylcellulose, die aus Baumwollgeweben hergestellt wurde, in der Form der Hydroxybase mit Disulfon oder Bis-(2-hydroxyethyl)sulfon bei Raumtemperatur in feuchtem Zustand oder trocken bei 140°C vernetzt werden kann, und daß bei der Naßvernetzung sehr gute Naßknitterwinkel resultieren.

Weiters ist bekannt, daß man Cellulosefasergewebe bei geeigneter Vorbehandlung und neutralen pH-Werten und ohne Salzzugabe mit konventionellen Reaktivfarbstoffen färben kann (Lewis et al., JSDC Band 107, März 1991 und JSDC Band 109, November 1993). Die Vinylsulfon- bzw. die Halogen-haltigen Stickstoffheterozyklen, die normalerweise als Anker-Gruppen unter alkalischen Bedingungen mit den Hydroxygruppen der Cellulose reagieren, reagieren mit Aminogruppen ohne Zugabe von Alkali, da sie wesentlich stärkere Nukleophile als die Hydroxygruppen darstellen.

In "Chemical Aftertreatment of Textiles" (H. Mark, N.S. Wooding, S.M. Atlas), Seite 414, wird beschrieben, daß quaternisierte Diethylaminocellulose in Hydroxyform bei Raumtemperatur naß vernetzt wurde.

Aus der WO95/15342 ist bekannt, Cellulose mit einem carboxymethylierenden Mittel umzusetzen. Die EP-A - 0 665 311 beschreibt die Herstellung aminierter Cellulosefasern, indem z.B. einer Celluloselösung ein aminsubstituiertes Cellulosederivat zugesetzt wird und aus der Lösung Fasern gesponnen werden.

In der italienischen Patentanmeldung 690,926 (1965) wird das innere Salz des Trissulfatoethylsulfoniums zur alkalischen Vernetzung von Gelatine beschrieben. Die Reaktion läuft bei pH 7 und bei einer Temperatur von 50°C ab.

Es ist Aufgabe der Erfindung, durch Vernetzungsreaktionen einen Lyocell-Formkörper herzustellen, dessen Fibrillierungseigenschaften reduziert und gezielt steuerbar sind, wobei das Herstellungsverfahren die geschilderten Nachteile der bekannten Vernetzungsverfahren nicht aufweist. Eine weitere Aufgabe der Erfindung ist es, Fasern zur Verfügung zu stellen, die im textilen Flächengebilde verbesserte Naßknitterwinkel aufweisen und die daher die Herstellung von Lyocell-Textilien völlig ohne die Verwendung der üblichen Hochveredelungschemikalien in der textilen Veredelung ermöglichen.

Dieses Ziel wird erfindungsgemäß mit einem Verfahren zur Herstellung eines Celluloseformkörpers nach dem Aminoxidverfahren erreicht, wobei eine Suspension von Cellulose in einem wäßrigen, tertiären Aminoxid in eine Celluloselösung übergeführt, die Celluloselösung geformt und durch ein wäßriges Fällbad geführt wird, wodurch ein Formkörper erhalten wird, der, gegebenenfalls nach Waschen, mit einem Vernetzungsmittel behandelt wird, das dadurch gekennzeichnet ist, daß zur Formung eine Celluloselösung eingesetzt wird, die eine Substanz enthält, mit welcher das Vernetzungsmittel aktiviert werden kann.

Es hat sich gezeigt, daß sich die Vernetzung eines Celluloseformkörpers über die Menge an Substanz, die zur Aktivierung des Vernetzungsmittels benötigt wird, gezielt steuern läßt und daß diese Steuerung auf wirkungsvolle Weise vorgenommen werden kann, wenn diese aktivierende Substanz nicht in einem Nachbehandlungsbad enthalten ist, wie dies im Stand der Technik vorgeschlagen wird, sondern in der geformten Celluloselösung, also im Formkörper selbst. Es hat sich ferner gezeigt, daß selbst bei Einsatz wasserlöslicher Substanzen diese weder vom Fällbad noch bei einem gegebenenfalls vorgesehenen Waschen in solchen Mengen herausgelöst werden, die einer wirtschaftlichen Fahrweise des erfindungsgemäßen Verfahrens entgegenstehen würden.

Der Vernetzungsgrad bestimmt die Fibrillierneigung in der Weise, daß ein hoher Vernetzungsgrad eine Faser mit geringer Fibrillierneigung, und umgekehrt ein geringer Vernetzungsgrad eine Faser mit dementsprechend höherer Fibrillierneigung ergibt.

Die aktivierende Substanz, beispielsweise eine Base oder eine Säure, wird zweckmäßigerweise in einer inaktiven Vorstufe, beispielsweise in Form eines neutralen Salzes, wie z.B. ein Chlorid, Sulfat, oder ein Alkali- bzw. Erdalkalisalz, bereits der Cellulosesuspension beigegeben und ist im Formkörper gleichförmig verteilt. Bei Verwendung einer inaktiven Vorstufe wird die Faser anschließend einer Behandlung mit einer Base bzw. Säure unterzogen, wodurch die aktivierende Substanz in die Basen- bzw. Säureform übergeführt wird. Dann wird die Faser nach einer gegebenenfalls vorgesehenen Wäsche mit dem Vernetzungsmittel in Kontakt gebracht. Bei einer besonders bevorzugten Ausführungsform hat die Faser während der Vernetzungsreaktion einen Feuchtigkeitsgehalt zwischen 70% und 150%. Die Vernetzungsmittel sind an sich bekannte Chemikalien, die bei der textilen Veredelung von Cellulosetextilien verwendet werden. Im wesentlichen handelt es sich um Moleküle, die die bekannten reaktiven Gruppen der Reaktivfarbstoffe tragen, die aber sowohl farbig als auch nicht farbig sein können.

Natürlich kann der Fachmann auch andere als die hier angeführten Vernetzungschemikalien verwenden, und zwar sowohl kommerziell erhältliche als auch neue, die eigens für die Vernetzung von Lyocell-Fasern synthetisiert werden. Die Verbindungen können mindestens zwei gleiche oder voneinander verschiedene reaktive Gruppen enthalten, können aber auch mehrere solche Gruppen besitzen.

Aus der EP-A - 0 538 977 ist bekannt, Fasern im nicht getrockneten Zustand in einer ersten Stufe mit einer wäßrigen Lösung eines milden Alkali und dann in einer zweiten Stufe die alkalisierte Faser mit einer wäßrigen Lösung des Vernetzungsmittels zu behandeln, wobei diese kein Alkali enthalten soll. Als mildes Alkali werden Natriumcarbonat, Natriumbicarbonat und Natriumhydroxid genannt. Mit dieser Verfahrensweise soll die Fibrillierungsneigung noch mehr herabgesetzt sein, als wenn in beiden Lösungen Alkali vorhanden ist.

Der Nachteil dieser in der EP-A - 0 538 977 beschriebenen Verfahrensweise besteht darin, daß es nicht möglich ist, eine bestimmte Menge Alkali gezielt in die Faser einzubringen, wodurch die Herabsetzung der Fibrillierneigung nicht gesteuert werden kann.

Ein weiterer Vorteil des erfindungsgemäßen Verfahrens besteht darin, daß sehr reaktive Vernetzungsmittel verwendet werden können, da es nicht erforderlich ist, die Vernetzungsmittel in einer gemeinsamen Lösung mit der aktivierenden Substanz, also z.B. einer Base, auf die Faser aufzubringen, wodurch eine hydrolytische Zerstörung des Vernetzungsmittels hintangehalten wird. Ferner ist vorteilhaft, daß durch eine hohe Konzentration an aktivierender Substanz, also z.B. der Base, lediglich stöchiometrische Mengen benötigt werden und dadurch eine quasi unendliche Flottenstabilität in der Vernetzerflotte gegeben ist. Auf diese Weise kann der Grad der Fibrillierungsverringerung über die Menge an eingebrachter Base gesteuert und frei gewählt werden.

Gemäß einer bevorzugten Ausführungsform des erfindungsgemäßen Verfahrens wird somit ein Vernetzungsmittel eingesetzt, das alkalisch aktivierbar ist. In diesem Fall weist die in der Celluloselösung enthaltene Substanz vorzugsweise mindestens eine quaternäre Ammoniumgruppe in Neutralsalzform auf. Eine solche Substanz ist zweckmäßigerweise ein Polymer, insbesondere ein Cellulosederivat oder ein anderes Polysaccharidderivat, ein Stärkederivat oder ein synthetisches Polymer, oder ein mit der Cellulose reagierendes Monomer.

Eine vorteilhafte Ausführungsform des erfindungsgemäßen Verfahrens ist dadurch gekennzeichnet, daß diese Substanz vorgesehen wird, indem sie der Cellulosesuspension zugegeben wird und indem der Formkörper mit einer Hydroxidbase in Kontakt gebracht wird, um die mindestens eine quaternäre Ammoniumgruppe in die Hydroxidform überzuführen.

Die Substanz zur Aktivierung des Vernetzungsmittels kann im Formkörper im unterstöchiometrischen Verhältnis zum Vernetzungsmittel enthalten sein.

Bevorzugt wird ein Vernetzungsmittel eingesetzt, das mindestens zwei Gruppen, ausgewählt aus Vinylsulfongruppen, halogenhaltigen Stickstoffheterozyklen, Epoxidgruppen und aktivierten Doppelbindungen, die mit den Hydroxygruppen der Cellulose reagieren können, aufweist.

Erfindungsgemäß kann jedoch auch ein Vernetzungsmittel eingesetzt werden, das sauer aktivierbar ist. In diesem Fall wird zur Aktivierung dieses Vernetzungsmittels vorzugsweise eine Substanz vorgesehen, welche mindestens eine Carboxylgruppe, Sulfonsäuregruppe oder Phosphonsäuregruppe in Neutralsalzform aufweist.

Eine solche Substanz ist zweckmäßigerweise ein Polymer, insbesondere ein Cellulosederivat oder ein anderes Polysaccharidderivat, ein Stärkederivat oder ein synthetisches Polymer, oder ein mit der Cellulose reagierendes Monomer. Auch Copolymere, die aus hydrophilen und hydrophoben Monomeren hergestellt werden, sind geeignet. Durch gezielte Einstellung des Verhältnisses an den beiden Monomeren kann sowohl eine maximale Substitution mit funktionellen Gruppen als auch eine geringe Löslichkeit im Fällbad erreicht werden.

Eine solche Substanz kann im Formkörper vorgesehen werden, indem sie der Cellulosesuspension zugegeben wird, und indem der Formkörper mit einer Protonensäure oder einer wäßrigen Lösung einer Lewis-Säure in Kontakt gebracht wird, um das Neutralsalz in die Säureform bzw. in die saure Lewis-Salzform überzuführen.

Die Substanz zur Aktivierung dieses Vernetzungsmittels kann im Formkörper im unterstöchiometrischen Verhältnis zum Vernetzungsmittel enthalten sein.

Als Vernetzungsmittel haben sich Aldehyde, wie Formaldehyd, Glyoxal, Acetale, Aminale, Verbindungen mit mindestens 2 Carboxylgruppen, N-Methylolverbindungen des Harnstoffs oder Derivate des Dihydroxyethylenharnstoffs besonders bewährt. Es können aber auch andere sauer aktivierbare Vernetzungsmittel eingesetzt werden.

Gegenstand der Erfindung ist auch ein Celluloseformkörper, der nach dem erfindungsgemäßen Verfahren erhältlich ist und bevorzugt als Faser oder als Folie ausgebildet ist.

Gegenstand der Erfindung ist weiters ein Gewebe, ein Non-Woven, ein Gestricke und ein Gewirke, das dadurch gekennzeichnet sind, daß es eine erfindungsgemäße Faser enthält. Es hat sich gezeigt, daß ein derartiges Gewebe verbesserte Naßknitterwinkel aufweist. Die erfindungsgemäße Faser ermöglicht somit die Herstellung von Textilien völlig ohne Anwendung der üblichen Hochveredelungschemikalien in Rahmen der textilen Veredelung.

Wie bereits oben erwähnt, wird die Faser erfindungsgemäß bevorzugt in feuchtem Zustand vernetzt. Dadurch können die für nach dem Aminoxidverfahren hergestellten Fasern bekannt guten physikalischen Faserdaten, wie hohe Naßfestigkeit, hohe Schlingenfestigkeit und hoher Naßmodul, beibehalten werden. Bevorzugt sind Feuchtigkeitsgehalte von 40% bis zu freier Quellung, die dann auftritt, wenn die Faser in langer Flotte frei schwimmt.

Mit den folgenden Beispielen wird die Erfindung noch näher erläutert.

### Beispiel 1

Einer Suspension von Zellstoff in einer wäßrigen Lösung von NMMO mit einem Wassergehalt von 40 Massen% wird als Vernetzungskatalysator Polydiallyldimethylammoniumchlorid in einer Menge zugegeben, daß in der späteren Vernetzungsreaktion ein durchschnittlicher Substitutionsgrad von 0,02 resultiert. Der Gehalt an Zellstoff in der Suspension wird so gewählt, daß nach Abdampfung des überschüssigen Wassers eine Celluloseendkonzentration von 10 Massen% erhalten wird.

Die Suspension wird gemäß dem in der EP-A - 0 356 419 beschriebenen Verfahren unter Anwendung der Dünnschichttechnik in eine formbare Celluloselösung übergeführt und gemäß dem in der WO 93/19230 beschriebenen Verfahren zu Fasern versponnen und durch ein wäßriges Fällbad geführt, in welchem die Cellulose gefällt wird.

In den Fasern ist damit Polydiallyldimethylammoniumchlorid enthalten. Anschließend werden die Fasern mit Wasser NMMO-frei gewaschen. Auch bei dieser Wäsche wird der Vernetzungskatalysator nur unwesentlich aus der Faser herausgelöst.

Durch Behandeln der Fasern mit Natronlauge (4 g NaOH/l) wird der Vernetzungskatalysator von der Chloridform in die aktive Hydroxidform übergeführt und anschließend mit einer wäßrigen Lösung des inneren Salzes des Dinatrium-Tris(β-sulfatoethyl)sulfoniums behandelt. Nach Abquetschen der Fasern auf 130% Feuchtigkeit werden sie getrocknet. Die erhaltenen Fasern weisen eine stark reduzierte Fibrillierneigung auf.

### Beispiel 2

Es werden analog Beispiel 1 Fasern hergestellt, wobei jedoch statt dem Polydiallyldimethylammoniumchlorid 1% Cellulose, die mit einem durchschnittlichen Substitutionsgrad von 0,3 mit Glycidyltrimethylammoniumchlorid derivatisiert ist, zugegeben wird. Die Überführung in die Hydroxidform erfolgt mit wäßriger KOH (3 g KOH/l).

Anschließend werden die Fasern mit einem Polyethylenglycol (MG 300), das endständig zwei Epoxygruppen aufweist, behandelt (25 g/l), auf 120% Feuchtigkeit abgequetscht und 3 Minuten im Mikrowellenherd erhitzt. Es werden Fasern mit stark reduzierter Fibrillierneigung erhalten.

### Beispiel 3

Es werden analog Beispiel 1 Fasern hergestellt, wobei jedoch statt dem Polydiallyldimethylammoniumchlorid 2% Natriumsalz der Polyvinylsulfonsäure zugegeben wird. Durch anschließendes Waschen mit einer wäßrigen Lösung von Magnesiumsulfat (4 g/l) wird die Faser in die Magnesiumsalzform gebracht, abgequetscht und mit einer Lösung (40 g/l) einer handelsüblichen N-Methylolverbindung des Harnstoffs, wie z.B. Dimethylolharnstoff (KAURIT S, Fa. BASF), Dimethylolhydroxyethylenharnstoff (FIXAPRET CP, Fa. BASF), behandelt.

Nach Abquetschen der Fasern auf 130% Feuchtigkeit werden sie 3 Minuten im Mikrowellenherd erhitzt. In allen Fällen werden Fasern mit einer stark reduzierten Fibrillierneigung erhalten.

### Beispiel 4

Es werden analog Beispiel 1 Fasern hergestellt, wobei jedoch statt dem Polydiallyldimethylammoniumchlorid 0,6% Natriumsalz der Poly-p-styrolsulfonsäure zugegeben wird. Durch anschließendes Waschen werden die Fasern NMMO-frei gewaschen und mit einer wäßrigen Schwefelsäure (4 g/l) werden die Fasern in die Säureform gebracht. Überschüssige Schwefelsäure wird durch anschließendes Waschen mit Wasser entfernt. Dann werden die Fasern mit einer Lösung von 50g/l Formaldehyd behandelt und auf 120% Feuchtigkeit abgequetscht.

Die auf diese Weise erhaltenen Fasern werden 10 Minuten bei 100°C getrocknet. Es werden Fasern mit einer stark reduzierten Fibrillierneigung erhalten.

## Patentansprüche

1. Verfahren zur Herstellung eines Celluloseformkörpers nach dem Aminoxidverfahren, wobei eine Suspension von Cellulose in einem wäßrigen, tertiären Aminoxid in eine Celluloselösung übergeführt, die Celluloselösung geformt und durch ein wäßriges Fällbad geführt wird, wodurch ein Formkörper erhalten wird, der, gegebenenfalls nach Waschen, mit einem Vernetzungsmittel behandelt wird,
dadurch gekennzeichnet, daß
zur Formung eine Celluloselösung eingesetzt wird, die eine Substanz enthält, mit welcher das Vernetzungsmittel aktiviert werden kann.

2. Verfahren nach Anspruch 1, dadurch gekennzeichnet, daß die in der eingesetzten Celluloselösung enthaltene Substanz mindestens eine Ammoniumgruppe in Neutralsalzform aufweist, und daß ein Vernetzungsmittel eingesetzt wird, welches alkalisch aktivierbar ist.

3. Verfahren nach Anspruch 2, dadurch gekennzeichnet, daß als Substanz ein Polymer, insbesondere ein Cellulosederivat oder ein anderes Polysaccharidderivat, ein Stärkederivat oder ein synthetisches Polymer, eingesetzt wird.

4. Verfahren nach Anspruch 2, dadurch gekennzeichnet, daß als Substanz ein mit Cellulose reagierendes Monomer eingesetzt wird.

5. Verfahren nach einem der Ansprüche 2 bis 4, dadurch gekennzeichnet, daß die Substanz, mit der das Vernetzungsmittels aktiviert werden kann, vorgesehen wird, indem sie der Cellulosesuspension zugegeben wird und indem der Formkörper mit einer Hydroxidbase in Kontakt gebracht wird, um die mindestens eine quaternäre Ammoniumgruppe in die Hydroxidform überzuführen.

6. Verfahren nach einem der Ansprüche 2 bis 5, dadurch gekennzeichnet, daß die Substanz zur Aktivierung des Vernetzungsmittels im Formkörper im unterstöchiometrischen Verhältnis zum Vernetzungsmittel enthalten ist.

7. Verfahren nach einem der Ansprüche 2 bis 5, dadurch gekennzeichnet, daß ein Vernetzungsmittel eingesetzt wird, das mindestens zwei Gruppen, ausgewählt aus Vinylsulfongruppen, halogenhaltigen Stickstoffheterozyklen, Epoxidgruppen und aktivierten Doppelbindungen, die mit den Hydroxygruppen der Cellulose reagieren können, aufweist.

8. Verfahren nach Anspruch 1, dadurch gekennzeichnet, daß ein Vernetzungsmittel eingesetzt wird, das sauer aktiviert werden kann, und daß die in der Celluloselösung zur Aktivierung dieses Vernetzungsmittels vorgesehene Substanz mindestens eine Carboxylgruppe, Sulfonsäuregruppe oder Phosphonsäuregruppe in Neutralsalzform aufweist.

9. Verfahren nach Anspruch 8, dadurch gekennzeichnet, daß als Substanz ein Polymer, insbesondere ein Cellulosederivat oder ein anderes Polysaccharidderivat, ein Stärkederivat oder ein synthetisches Polymer, eingesetzt wird.

10. Verfahren nach Anspruch 8, dadurch gekennzeichnet, daß als Substanz ein mit Cellulose reagierendes Monomer eingesetzt wird.

11. Verfahren nach einem der Ansprüche 8 bis 10, dadurch gekennzeichnet, daß die Substanz zur Aktivierung des Vernetzungsmittels vorgesehen wird, indem sie der Cellulosesuspension zugegeben wird, und indem der Formkörper mit einer Protonensäure oder einer wäßrigen Lösung einer Lewis-Säure in Kontakt gebracht wird, um das Neutralsalz in die Säureform bzw. in die saure Lewis-Salzform überzuführen.

12. Verfahren nach einem der Ansprüche 8 bis 11, dadurch gekennzeichnet, daß die Substanz zur Aktivierung dieses Vernetzungsmittels im Formkörper im unterstöchiometrischen Verhältnis zum Vernetzungsmittel enthalten ist.

13. Verfahren nach Anspruch 12, dadurch gekennzeichnet, daß als Vernetzungsmittel Formaldehyd, Glyoxal, Verbindungen mit mindestens 2 Carboxylgruppen, N-Methylolverbindungen des Harnstoffs oder Derivate des Dihydroxyethylenharnstoffs eingesetzt werden.

14. Celluloseformkörper, erhältlich nach einem Verfahren gemäß einem der Ansprüche 1 bis 13.

15. Celluloseformkörper nach Anspruch 14, dadurch gekennzeichnet, daß er als Faser oder als Folie ausgebildet ist.

16. Gewebe, Non-Woven, Gestricke und Gewirke, dadurch gekennzeichnet, daß es eine Faser gemäß Anspruch 15 enthält.

## Claims

1. Process for producing a cellulose moulded body by the amine oxide process, in which a suspension of cellulose in an aqueous, tertiary amine oxide is converted into a cellulose solution, the cellulose solution is moulded and passed through an aqueous precipitation bath, as a result of which a moulded body is obtained which is treated with a crosslinking agent, possibly after washing, characterized in that, for the purpose of moulding, a cellulose solution is used which contains a substance with which the crosslinking agent can be activated.

2. Process according to Claim 1, characterized in that the substance contained in the cellulose solution used has at least one ammonium group in neutral salt form and in that a crosslinking agent is used which can be alkaline-activated.

3. Process according to Claim 2, characterized in that a polymer, in particular, a cellulose derivative or another polysaccharide derivative, a starch derivative or a synthetic polymer is used as substance.

4. Process according to Claim 2, characterized in that a monomer which reacts with cellulose is used as substance.

5. Process according to one of Claims 2 to 4, characterized in that the substance with which the crosslinking agent can be activated is provided by adding it to the cellulose suspension and by bringing the moulded body into contact with a hydroxide base in order to convert the at least one quaternary ammonium group into the hydroxide form.

6. Process according to one of Claims 2 to 5, characterized in that the moulded body contains the substance for activating the crosslinking agent in a hypostoichiometric ratio with respect to the crosslinking agent.

7. Process according to one of Claims 2 to 5, characterized in that a crosslinking agent is used which comprises at least two groups selected from vinylsulphone groups, halogen-containing nitrogen heterocycles, epoxide groups and activated double bonds which can react with the hydroxy groups of the cellulose.

8. Process according to Claim 1, characterized in that a crosslinking agent is used which can be acid-activated and in that the substance provided in the cellulose solution for activating said crosslinking agent comprises at least one carboxyl group, sulphonic acid group or phosphonic acid group in neutral salt form.

9. Process according to Claim 8, characterized in that a polymer, in particular, a cellulose derivative or another polysaccharide derivative, a starch derivative or a synthetic polymer is used as substance.

10. Process according to Claim 8, characterized in that a monomer which reacts with cellulose is used as substance.

11. Process according to one of Claims 8 to 10, characterized in that the substance for activating the crosslinking agent is provided by adding it to the cellulose suspension and by bringing the moulded body into contact with a protonic acid or an aqueous solution of a Lewis acid in order to convert the neutral salt into the acid form or into the acidic Lewis salt form.

12. Process according to one of Claims 8 to 11, characterized in that the moulded body contains the substance for activating said crosslinking agent in a hypostoichiometric ratio with respect to the crosslinking agent.

13. Process according to Claim 12, characterized in that formaldehyde, glyoxal, compounds containing at least two carboxyl groups, N-methylol compounds of urea or derivatives of dihydroxyethyleneurea are used as crosslinking agents.

14. Cellulose moulded body, obtainable by a process according to one of Claims 1 to 13.

15. Cellulose moulded body according to Claim 14, characterized in that it is formed as fibre or as sheet.

16. Woven fabric, nonwoven fabric, knitted fabric and hosiery, characterized in that it contains a fibre according to Claim 15.

## Revendications

1. Procédé de fabrication d'un article moulé en cellulose selon le procédé à l'oxyde d'amine, conformément auquel on convertit une suspension de cellulose dans un oxyde d'amine tertiaire aqueux en une solution de cellulose, on moule la solution de cellulose et on la fait passer à travers un bain de précipitation aqueux, opération par laquelle on obtient un article moulé que l'on traite, éventuellement après lavage, par un agent de réticulation,
caractérisé en ce que
pour le moulage, on met en oeuvre une solution de cellulose qui contient une substance avec laquelle l'agent de réticulation peut être activé.

2. Procédé suivant la revendication 1, caractérisé en ce que la substance contenue dans la solution de cellulose mise en oeuvre présente au moins un groupe ammonium sous la forme de sel neutre et en ce que l'on utilise un agent de réticulation qui peut être activé par voie alcaline.

3. Procédé suivant la revendication 2, caractérisé en ce que l'on utilise, à titre de substance, un polymère, plus particulièrement, un dérivé de cellulose ou un autre dérivé de polysaccharide, un dérivé d'amidon, ou un polymère synthétique.

4. Procédé suivant la revendication 2, caractérisé en ce que l'on utilise, à titre de substance, un monomère qui réagit avec la cellulose.

5. Procédé suivant l'une quelconque des revendications 2 à 4, caractérisé en ce que la substance avec laquelle on peut activer l'agent de réticulation est prévue pour autant qu'on l'ajoute à la suspension de cellulose et pour autant que l'on mette l'article moulé en contact avec une base du type hydroxyde, en vue de convertir l'au moins un radical ammonium quaternaire en la forme hydroxyde.

6. Procédé suivant l'une quelconque des revendications 2 à 5, caractérisé en ce que la substance pour l'activation de l'agent de réticulation est contenu dans l'article moulé en un rapport vis-à-vis de l'agent de réticulation inférieure à la proportion stoechiométrique.

7. Procédé suivant l'une quelconque des revendications 2 à 5, caractérisé en ce que l'on utilise un agent de réticulation qui présente au moins deux radicaux choisis parmi les groupes vinylsulfone, les hétérocycles azotés halogénés, les radicaux époxyde et les doubles liaisons activées, qui peuvent réagir avec les radicaux hydroxyle de la cellulose.

8. Procédé suivant la revendication 1, caractérisé en ce que l'on utilise un agent de réticulation qui peut être activé par voie acide et en ce que la substance prévue dans la solution de cellulose pour l'activation de cet agent de réticulation présente au moins un radical carboxyle, un radical acide sulfonique ou un radical acide phosphonique, sous forme de sel neutre.

9. Procédé suivant la revendication 8, caractérisé en ce que l'on met en oeuvre, à titre de substance, un polymère, plus particulièrement, un dérivé de cellulose ou un autre dérivé d'un polysaccharide, un dérivé d'amidon, ou un polymère synthétique.

10. Procédé suivant la revendication 9, caractérisé en ce que l'on utilise un monomère qui réagit avec la cellulose à titre de substance.

11. Procédé suivant l'une quelconque des revendications 8 à 10, caractérisé en ce que la substance pour l'activation de l'agent de réticulation est prévue pour autant qu'on l'ajoute à la suspension de cellulose et pour autant que l'on mette l'article moulé en contact avec un acide protonique ou une solution aqueuse d'un acide de Lewis, afin de convertir le sel neutre en la forme acide ou en la forme sel d'acide de Lewis.

12. Procédé suivant l'une quelconque des revendications 8 à 11, caractérisé en ce que la substance pour l'activation de cet agent de réticulation est contenue dans l'article moulé en un rapport vis-à-vis de l'agent de réticulation inférieur à la proportion stoechiométrique.

13. Procédé suivant la revendication 12, caractérisé en ce que l'on met en oeuvre, à titre d'agent de réticulation, le formaldéhyde, le glyoxal, des composés comportant au moins 2 radicaux carboxyle, des composés N-méthylolés de l'urée, ou des dérivés de la dihydroxyéthylèneurée.

14. Articles moulés en cellulose, que l'on peut obtenir par la mise en oeuvre d'un procédé suivant l'une quelconque des revendications 1 à 13.

15. Article moulé en cellulose suivant la revendication 14, caractérisé en ce qu'il se présente sous la forme de fibres ou sous la forme de feuilles.

16. Articles tissés, non tissés, tricotés, caractérisés en ce qu'ils contiennent des fibres suivant la revendication 15.
